# EUROPEAN PATENT APPLICATION

(11) **EP 2 626 225 A1**
(43) Date of publication of application: **14.08.2013**
(21) Application number: 11830584.6
(22) Date of filing: 30.09.2011
(51) Int. Cl.: B60H 1/22, B60H 1/03

(54) **HEAT-MEDIUM HEATING DEVICE AND VEHICLE AIR CONDITIONING DEVICE PROVIDED WITH SAME**

(30) Priority: 12.09.2011 JP 2011198070; 07.10.2010 JP 2010227671
(71) Applicant: Mitsubishi Heavy Industries, Ltd., Tokyo 108-8215 (JP)
(72) Inventor: KOMINAMI, Satoshi, Tokyo 108-8215 (JP); JOBOJI, Yasunobu, Tokyo 108-8215 (JP); KUNIEDA, Naoto, Nagoya-shi Aichi 453-0862 (JP)
(74) Representative: Henkel, Breuer & Partner
(86) International application number: PCT/JP2011/072562
(87) International publication number: WO 2012/046652

(57) **Abstract**

An object is to provide a compact, lightweight, low-cost heating-medium heating unit in which a plurality of flat heat-exchange tubes and PTC heaters are stacked to reduce the thermal contact resistance, thereby enhancing the heat transfer performance, as well as a vehicle air conditioner equipped with the same. The heating-medium heating unit is provided with a plurality of flat heat-exchange tubes (17) each having an inlet header (22) and an outlet header (23) at one end or both ends of flat tube portions (20) through which a heating medium is circulated; sealing materials (26) that seal the peripheries of communicating holes (24, 25) of the inlet headers (22) and the outlet headers (23) of the stacked flat heat-exchange tubes (17); PTC heaters assembled between the flat tube portions (20) of the flat heat-exchange tubes (17); and a heat-exchange pressing member (16) that presses the alternately stacked flat heat-exchange tubes (17) and PTC heaters into close contact with each other, wherein a deformation-preventing reinforcing portion (29) is provided around each of the communicating holes (24, 25) in the inlet header (22) and the outlet header (23) of each of the flat heat-exchange tubes (17).

## Description

### {Technical Field}

The present invention relates to a heating-medium heating unit that heats a heating medium using a PTC heater, and to a vehicle air conditioner equipped with the same.

### {Background Art}

In vehicle air conditioners applied to electric vehicles, hybrid vehicles, and so on, one known heating-medium heating unit for heating a medium to be heated, serving as a heat source for heating, employs a PTC heater that uses a positive temperature coefficient thermistor device (Positive Temperature Coefficient; hereinafter referred to as a PTC device) as a heating element. The PTC heater has a positive temperature thermistor coefficient and thus shows an increasing resistance value as the temperature increases, which allows the current consumption to be controlled and the increase in temperature to be slowed, and thereafter, the current consumption and the temperature of the heat generating portion reach a saturation region when they are stabilized; that is, the PTC heater has a self temperature control characteristic.

For the heating-medium heating unit as described above, PTL 1 presents a heating-medium heating unit in which a housing having an inlet and an outlet for the heating medium accommodates a large number of partitions that partition the interior of the housing into heating chambers and heating-medium circulation chambers, and PTC heating devices are inserted at the heating chamber side partitioned by this partition so as to be in contact with the partitions, so that the heating medium circulated to the circulation chambers is heated via the partitions.

Furthermore, PTL 2 presents a heating-medium heating unit having a stacked structure in which an electrode plate, an insulating layer, and a heat transfer layer are provided on both sides of a PTC device to form a flat PTC heater, on both sides of which a pair of heating-medium circulation boxes, which have an inlet and an outlet for the heating medium and which are communicated with each other, are stacked, and in which a board accommodating box that accommodates a control board and a cover are provided on the outer surface thereof.

### {Citation List}

### {Patent Literature}

{PTL 1} Japanese Unexamined Patent Application, Publication No. 2008-7106
{PTL 2} Japanese Unexamined Patent Application, Publication No. 2008-56044

### {Summary of Invention}

### {Technical Problem}

However, the unit presented in PTL 1 has a configuration in which the PTC heating devices are inserted in the heating chambers formed by the partitions. Therefore, this has a problem in that it is not easy to insert the PTC heating devices between the partitions serving as heat transfer surfaces in close contact therewith, and the thermal contact resistance between the partitions and the PTC heating devices is large, and thus the heat transfer efficiency tends to decrease.

The unit presented in PTL 2 has a configuration in which a pair of heating-medium circulation boxes having radiation fins are stacked on both sides of a PTC heater, on the outer surface of which a board accommodating box that accommodates a control board and a cap are stacked to seal a heating-medium channel, and which are tightened with bolts. Therefore, the thermal contact resistance between the PTC heater and the heating-medium circulation boxes can be reduced. However, the heating-medium circulation boxes, the board accommodating box, and so on are made of die-cast aluminum in view of heat resistance, heat transfer and so on, and thus, this unit has problems in terms of limited size and weight reduction and a high price.

The present invention is made in consideration of such circumstances, and an object thereof is to provide a compact, lightweight, low-cost heating-medium heating unit in which a plurality of flat heat-exchange tubes are used, the flat heat-exchange tubes and PTC heaters are stacked to reduce the thermal contact resistance, thereby enhancing the heat transfer performance, and in which a decrease in sealing performance due to deformation of the flat heat-exchange tubes when stacked can be prevented, as well as a vehicle air conditioner equipped with the same.

### {Solution to Problem}

To solve the above problem, the heating-medium heating unit of the present invention and the vehicle air conditioner equipped with the same adopt the following solutions.
Specifically, a heating-medium heating unit according to a first aspect of the present invention comprises a plurality of stacked flat heat-exchange tubes each having an inlet header and an outlet header at one end or both ends of flat tube portions through which a heating medium is circulated; sealing materials that seal peripheries of communicating holes of the inlet headers and the outlet headers of the alternately stacked flat heat-exchange tubes; PTC heaters assembled between the flat tube portions of the flat heat-exchange tubes; and a heat-exchange pressing member that presses the alternately stacked flat heat-exchange tubes and the PTC heaters into close contact with each other, wherein a deformation-preventing reinforcing portion is provided around each of the communicating holes in the inlet header and the outlet header of each of the flat heat-exchange tubes (first aspect).

According to the first aspect of the present invention, in a heating-medium heating unit in which a plurality of flat heat-exchange tubes are stacked, with sealing materials that seal the peripheries of the communicating holes of the inlet headers and the outlet headers interposed therebetween, and in which the flat heat-exchange tubes and the PTC heaters are pressed into close contact by the heat-exchange pressing member, with the PTC heaters being assembled between the flat tube portions, deformation-preventing reinforcing portions are provided around the communicating holes in the inlet headers and the outlet headers of the flat heat-exchange tubes. Therefore, deformation around the communicating holes of the inlet headers and the outlet headers when the stacked flat heat-exchange tubes and PTC heaters are pressed into close contact by the heat-exchange pressing member can be prevented by using the deformation-preventing reinforcing portions provided around the communicating holes in the inlet headers and the outlet headers of the flat heat-exchange tubes, and thus the sealing performance around the communicating holes with the sealing materials can be ensured. This allows leakage of the heating medium from the peripheries of the communicating holes of the inlet headers and the outlet headers to be prevented and allows the flat heat-exchange tubes and the PTC heaters to be reliably brought into close contact to reduce the thermal contact resistance therebetween to enhance the heat transfer efficiency, thereby enhancing the heating performance of the heating-medium heating unit. The use of the flat heat-exchange tubes eliminates the need for a heating-medium circulation box, which is a large component made by die-casting, and so on. Accordingly, the size and weight as well as the cost of the heating-medium heating unit can be reduced.

In the heating-medium heating unit according to the first aspect of the present invention, the deformation-preventing reinforcing portion is a spacer member inserted around each of the communicating holes in the inlet headers and the outlet headers (second aspect).

According to the second aspect of the present invention, the deformation-preventing reinforcing portion is a spacer member inserted around each of the communicating holes in the inlet headers and the outlet headers. This can prevent deformation around the communicating holes of the inlet headers and the outlet headers when the stacked flat heat-exchange tubes and PTC heaters are pressed into close contact by the heat-exchange pressing member by using the spacer members inserted around the communicating holes in the inlet headers and the outlet headers. Accordingly, this can ensure the sealing performance around the communicating holes of the inlet headers and the outlet headers using the sealing materials, thereby preventing leakage of the heating medium from the peripheries of the communicating holes.

In the heating-medium heating unit according to the second aspect of the present invention, the spacer member is integrally provided with a rotation stop portion (third aspect).

According to the third aspect of the present invention, the spacer member is integrally provided with a rotation stop portion. This allows a positional shift of the spacer members inserted around the communicating holes of the inlet headers and the outlet headers due to the rotation of the spacer members to be prevented by the rotation stop portion. This allows the spacer members to be located at predetermined positions and to be inserted therein, thereby preventing a situation in which the flow of the heating medium is obstructed by the spacer members

In the heating-medium heating unit according to one of the second and third aspects of the present invention, the spacer member is provided with a C-shaped main body in which a portion corresponding to the communicating hole and a portion facing a heating-medium circulation path define a cutout portion and is inserted such that the both end faces thereof come into contact with an upper and a lower inner surfaces of each of the inlet headers and the outlet headers (fourth aspect).

According to the fourth aspect of the present invention, the spacer member is provided with a C-shaped main body in which a portion corresponding to the communicating hole and a portion facing a heating-medium circulation path define a cutout portion and is inserted such that the both end faces thereof come into contact with the upper and lower inner surfaces of each of the inlet headers and the outlet headers. This eliminates a possibility that the spacer members present resistance to the circulation of the heating medium in the flat heat-exchange tubes and can prevent deformation around the communicating holes of the inlet headers and the outlet headers when the flat heat-exchange tubes are pressed into close contact with each other by the heat-exchange pressing member by using the C-shaped main bodies, which are in contact with the inner surfaces. Accordingly, this can reliably ensure the sealing performance around the communicating holes of the inlet headers and the outlet headers, thus enhancing the reliability against leakage of the heating medium.

In the heating-medium heating unit according to the fourth aspect of the present invention, the spacer member has a thin-walled joint integrally formed with the cutout portion facing the heating-medium circulation path and has a radial rib having the same wall thickness as that of the main body at at least one location on the joint (fifth aspect).

According to the fifth aspect of the present invention, the thin-walled joint is integrally formed with the cutout portion of the spacer member, facing the heating-medium circulation path, and the radial rib having the same wall thickness as that of the main body is provided at at least one location on the joint. Therefore, if the size of the cutout portion facing the heating-medium circulation path is excessively increased to reduce the circulation resistance presented to the heating medium, the deformation prevention effect around the communicating holes of the inlet headers and the outlet headers due to the spacer members is decreased; however, providing the thin-walled joint and the rib having the same wall thickness as that of the main body allows the deformation prevention effect around the communicating holes to be maintained while reducing the circulation resistance presented to the heating medium. Accordingly, it is possible to simultaneously achieve both the reduction in circulation resistance presented to the heating medium and the deformation prevention effect around the communicating holes, which conflict with each other.

In the heating-medium heating unit according to any one of the second to fourth aspects of the present invention, the spacer member is an integrally molded component formed by cutting an extruded molded component to a predetermined thickness (sixth aspect).

According to the sixth aspect of the present invention, the spacer member is an integrally molded component formed by cutting an extruded molded component to a predetermined thickness. Therefore, by manufacturing a long extruded molded component whose cross-section is shaped to correspond to the C-shape of the main body and in which rotation stop portions are integrally formed therearound as necessary and by cutting it into a predetermined thickness, the spacer member can be simply and easily manufactured as an integrally molded component. This can further reduce the cost of the spacer member, and thus reduce the cost of the heating-medium heating unit.

Furthermore, in the heating-medium heating unit according to any one of the fourth to sixth aspects of the present invention, the spacer member is provided with, at at least one location on the outer circumference of the C-shaped main body, a locating rib that is in contact with an inner circumferential surface of each of the inlet headers and the outlet headers, and an outer circumferential surface of the main body is reduced in thickness in a circumferential direction, while keeping the rib (seventh aspect).

According to the seventh aspect of the present invention, the locating rib, which is in contact with the inner circumferential surface of each of the inlet headers and the outlet headers, is provided at at least one location on the outer circumference of the C-shaped main body of the spacer member, and the outer circumferential surface of the main body is reduced in thickness in the circumferential direction, while keeping the rib. Therefore, the spacer member can be reduced in size as much as possible by forming the main body of the spacer member in a shape that mainly supports the periphery of the communicating hole of each of the inlet headers and the outlet headers, which tend to be deformed when pressed by the heat-exchange pressing member, and by forming the main body in a shape such that the outer circumferential surface that comes into contact with the inner circumferential surface of each of the inlet headers and the outlet headers, which are resistant to deformation, is reduced in thickness in the circumferential direction. Accordingly, this can reduce the amount of a material used to manufacture the spacer member, thus reducing the cost of the spacer member.

In the heating-medium heating unit according to any one of the second and third aspects of the present invention, the spacer member is a ring-shaped integrally press-molded component in which a plurality of depressions and protrusions are alternately bent by molding in a wave shape in a circumferential direction (eighth aspect).

According to the eighth aspect of the present invention, the spacer member is a ring-shaped integrally press-molded component in which a plurality of depressions and protrusions are alternately bent by molding in a wave shape in the circumferential direction. Accordingly, the use of the ring-shaped integrally press-molded component in which the heating medium circulates between the plurality of depressions and protrusions, which are alternately bent by molding in the circumferential direction, as the spacer member allows the resistance presented to the heating medium in the flat heat-exchange tubes to be reduced, and allows the whole circumferences of the communicating holes of the inlet headers and the outlet headers, which tend to be deformed when pressed by the heat-exchange pressing member, to be supported by the plurality of depressions and protrusions. Accordingly, the use of the integrally press-molded component as the spacer member can reduce the cost and weight and can enhance the reliability against leakage of the heating medium by maintaining the deformation prevention effect around the communicating holes to ensure the sealing performance around the communicating holes while suppressing a drop in performance due to pressure loss.

In the heating-medium heating unit according to the eighth aspect of the present invention, the plurality of depressions and protrusions are provided in a radiating pattern in a radial direction (ninth aspect).

According to the ninth aspect of the present invention, the plurality of depressions and protrusions are provided in a radiating pattern in the radial direction. This allows the heating medium that flows in or out via the communicating holes of the inlet headers and the outlet headers to be made to flow in or out along the plurality of depressions and protrusions provided in a radiating pattern in the radial direction. Accordingly, this can minimize the circulation resistance presented by the spacer member to the heating medium that is let in and out via the communicating holes, thereby preventing a drop in performance due to pressure loss.

In the heating-medium heating unit according to the first aspect of the present invention, the deformation-preventing reinforcing portion is a rib that is integrally molded around each of the communicating holes of the inlet headers and the outlet headers (tenth aspect).

According to the tenth aspect of the present invention, the deformation-preventing reinforcing portion is a rib that is integrally molded around each of the communicating holes of the inlet headers and the outlet headers. The use of the ribs integrally molded around the communicating holes of the inlet headers and the outlet headers ensures the strength around the communicating holes and can suppress deformation around the communicating holes of the inlet headers and the outlet headers when the stacked flat heat-exchange tubes and PTC heaters are pressed into close contact with each other by the heat-exchange pressing member. Accordingly, this ensures the sealing performance around the communicating holes of the inlet headers and the outlet headers using the sealing materials, thereby preventing leakage of the heating medium from the peripheries of the communicating holes. Furthermore, the use of the integrally molded ribs as the deformation-preventing reinforcing portions can prevent an increase in the number of components, thus suppressing an increase in cost.

Furthermore, in the heating-medium heating unit according to the tenth aspect of the present invention, the rib is provided so as to point in a radial direction at a plurality of locations around each of the communicating holes of the inlet headers and the outlet headers (eleventh aspect).

According to the eleventh aspect of the present invention, the rib is provided so as to point in the radial direction at a plurality of locations around each of the communicating holes of the inlet headers and the outlet headers. Therefore, the ribs provided so as to point in the radial direction at the plurality of locations around the communicating holes can greatly increase the strength of the peripheries of the communicating holes to suppress deformation around the communicating holes of the inlet headers and the outlet headers when the stacked flat heat-exchange tubes and PTC heaters are pressed into close contact with each other by the heat-exchange pressing member. Accordingly, this ensures the sealing performance around the communicating holes of the inlet headers and the outlet headers using the sealing materials, thereby reliably preventing leakage of the heating medium from the peripheries of the communicating holes.

In the heating-medium heating unit according to any one of the first to eleventh aspects of the present invention, the sealing material is a liquid gasket or an O-ring (twelfth aspect).

According to the twelfth aspect of the present invention, the sealing material is a liquid gasket or an O-ring. Therefore, the liquid gaskets are applied or the O-rings are interposed around the communicating holes of the inlet headers and the outlet headers when the flat heat-exchange tubes and the PTC heaters are sequentially stacked for assembly, and at the same time as the flat heat-exchange tubes and the PTC heaters are pressed with the heat-exchange pressing member, they can be brought into close contact with the inlet headers and the outlet headers, which are prevented from deforming by the supply portion. Accordingly, the heating-medium heating unit can be easily assembled using the liquid gaskets or O-rings, and the sealing performance using the liquid gaskets or O-rings can be reliably ensured.

In the heating-medium heating unit according to any one of the first to twelfth aspects of the present invention, the plurality of stacked flat heat-exchange tubes and the PTC heaters are tightly secured to an inner surface of a casing provided with a heating-medium inlet and a heating-medium outlet that communicate with the inlet header and the outlet header, respectively, with the heat-exchange pressing member (thirteenth aspect).

According to the thirteenth aspect of the present invention, the plurality of stacked flat heat-exchange tubes and PTC heaters are tightly secured to the inner surface of a casing provided with a heating-medium inlet and a heating-medium outlet that communicate with the inlet header and the outlet header, respectively, with the heat-exchange pressing member. Therefore, by tightly securing the plurality of stacked flat heat-exchange tubes and PTC heaters to the inner surface of the casing with the heat-exchange pressing member, they can be fixed into close contact with each other. This allows the flat heat-exchange tubes and the PTC heaters to be brought into close contact with each other during the process of assembling them in the casing, thereby ensuring the sealing performance using the sealing materials, and allows the thermal contact resistance between the flat heat-exchange tubes and the PTC heaters to be reduced, thereby enhancing the heat transfer efficiency and also the production efficiency. This eliminates the need for using a casing made of an aluminum alloy having heat resistance and heat transfer properties, such as the conventional heating-medium circulation box; a plastic casing may be used to reduce the weight and cost.

In the heating-medium heating unit according to the thirteenth aspect of the present invention, the casing integrally accommodates a control system that controls power to be supplied to the PTC heaters (fourteenth aspect).

According to the fourteenth aspect of the present invention, the casing integrally accommodates a control system that controls power to be supplied to the PTC heaters. This allows the state of the power supplied to the PTC heaters stacked together with the plurality of flat heat-exchange tubes to be controlled via the control system integrally accommodated in the casing, such as the control board and switching devices. This can simplify the wiring and so on of the control system, and hence a high-performance, compact heating-medium heating unit in which the flat heat-exchange tubes, the PTC heaters, and the control system therefor are integrally accommodated in the casing can be provided.

A vehicle air conditioner according to a fifteenth aspect of the present invention is a vehicle air conditioner configured to cause a heating medium heated by a heating-medium heating unit to circulate to a radiator disposed in an air channel, wherein the heating-medium heating unit is the heating-medium heating unit according to any one of the first to fourteenth aspects described above (fifteenth aspect).

According to the fifteenth aspect of the present invention, since the heating medium heated by one of the foregoing heating-medium heating units can be circulated to a radiator disposed in an air channel, leakage of the heating medium to the radiator in the heating-medium circulating circuit can be prevented, and the heating performance of the heating medium in the heating-medium heating unit can be enhanced. Accordingly, the reliability and air-conditioning performance of the vehicle air conditioner can be enhanced.

### {Advantageous Effects of Invention}

With the heating-medium heating unit of the present invention, since deformation around the communicating holes of the inlet headers and the outlet headers when the stacked flat heat-exchange tubes and PTC heaters are pressed by the heat-exchange pressing member into close contact can be prevented by using the deformation-preventing reinforcing portions provided around the communicating holes in the inlet headers and the outlet headers of the flat heat-exchange tubes, and thus the sealing performance around the communicating holes with the sealing materials can be ensured, leakage of the heating medium from the peripheries of the communicating holes of the inlet headers and the outlet headers can be prevented, and the flat heat-exchange tubes and the PTC heaters can be reliably brought into close contact to reduce the thermal contact resistance therebetween to enhance the heat transfer efficiency, thereby enhancing the heating performance of the heating-medium heating unit. The use of the flat heat-exchange tubes eliminates the need for a heating-medium circulation box, which is a large component made by die-casting, and so on, and accordingly, the size and weight as well as the cost of the heating-medium heating unit can be reduced.

With the vehicle air conditioner of the present invention, since leakage of the heating medium to the radiator in the heating-medium circulating circuit can be prevented, and the heating performance of the heating medium in the heating-medium heating unit can be enhanced, the reliability and air-conditioning performance of the vehicle air conditioner can be enhanced.

### {Brief Description of Drawings}

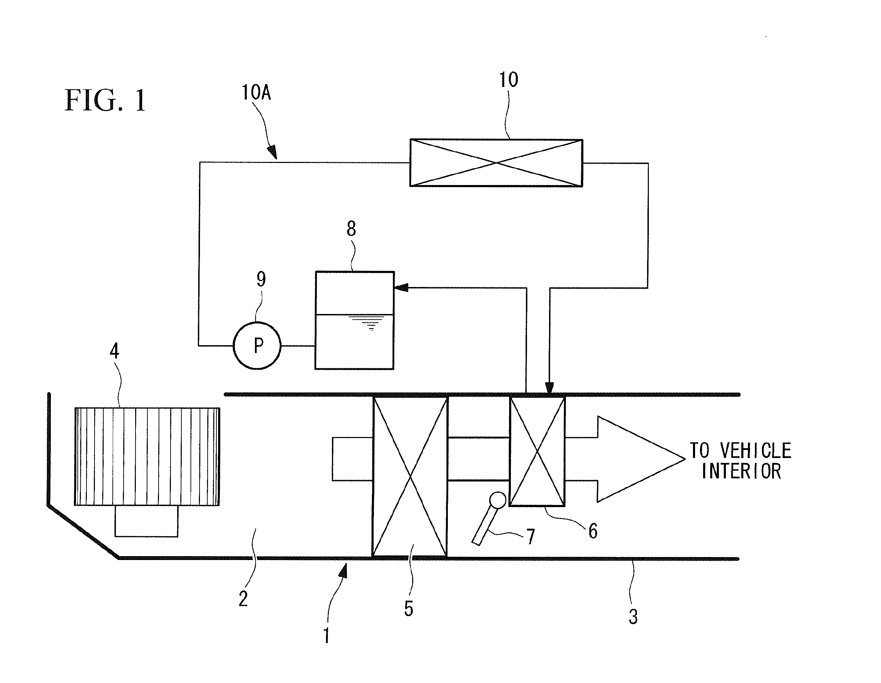

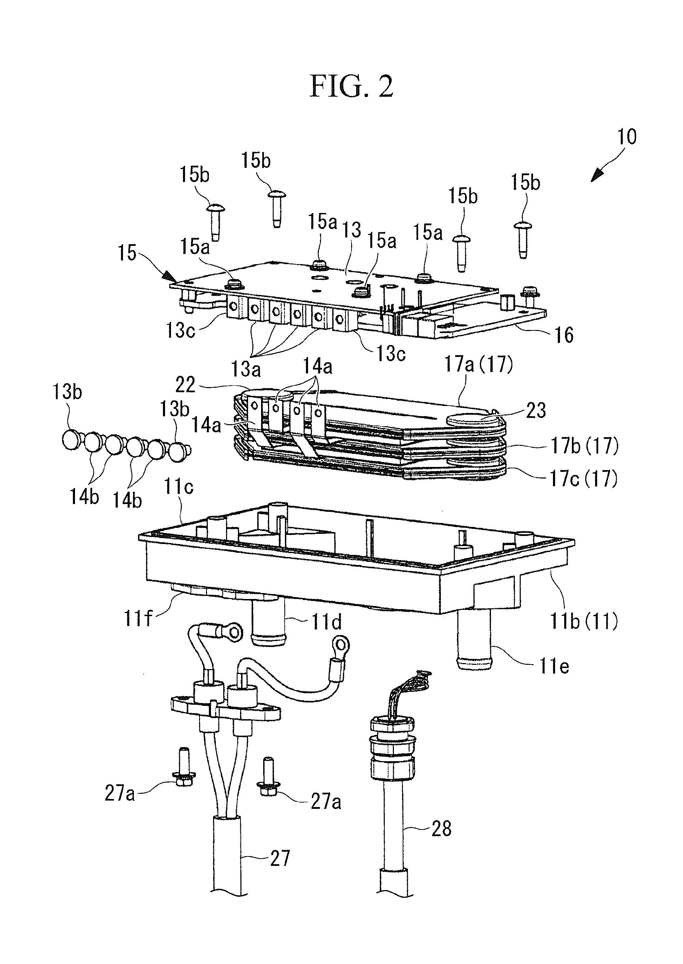

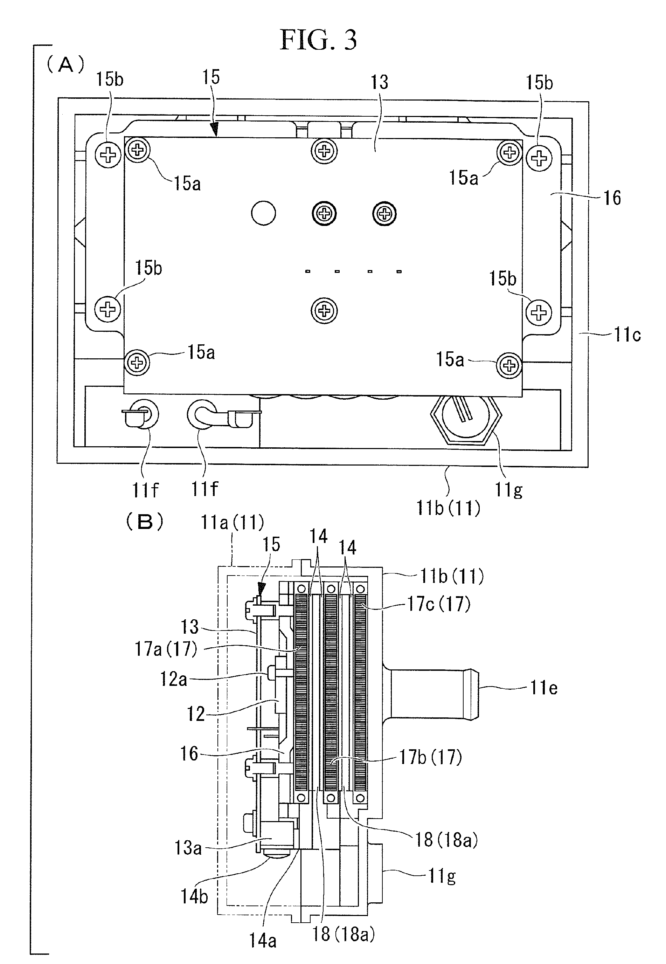

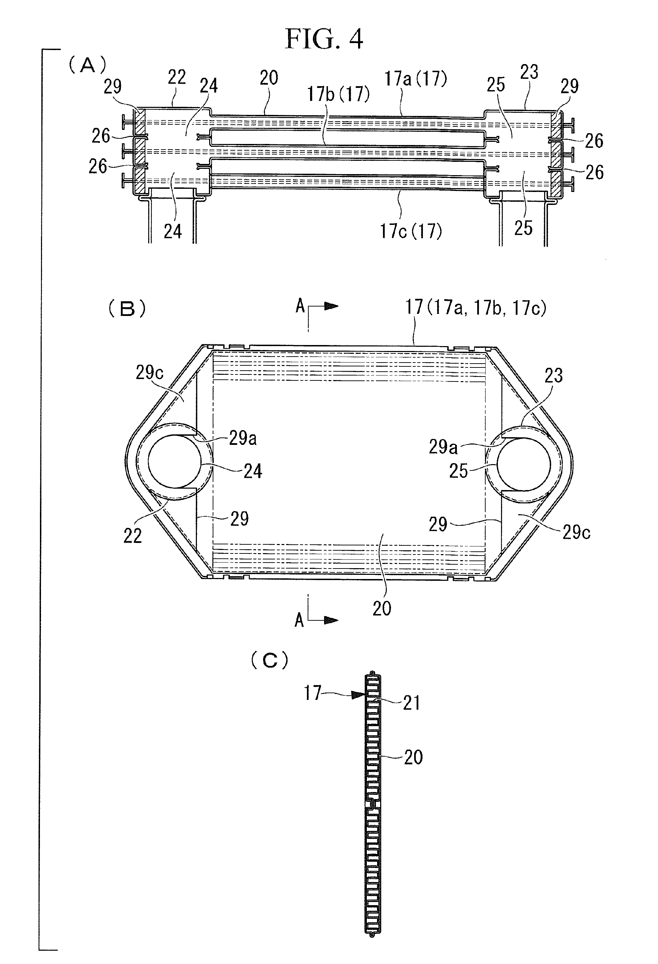

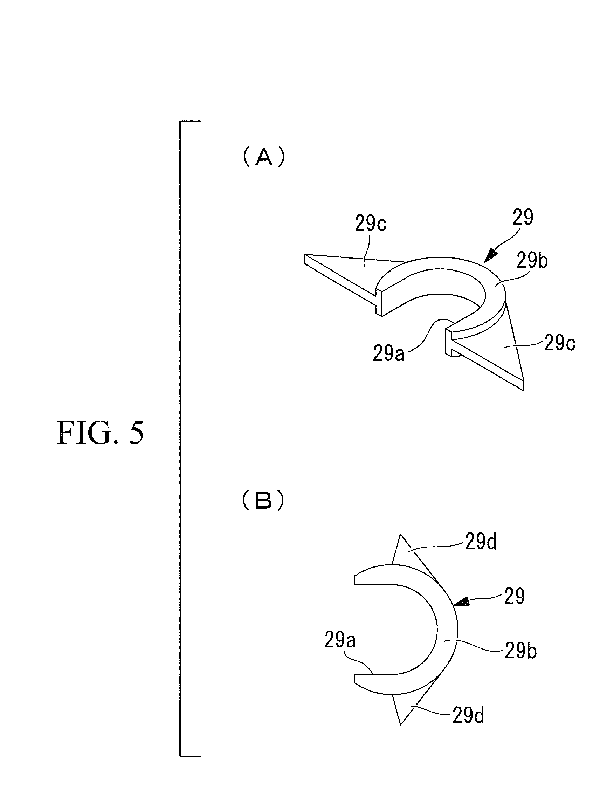

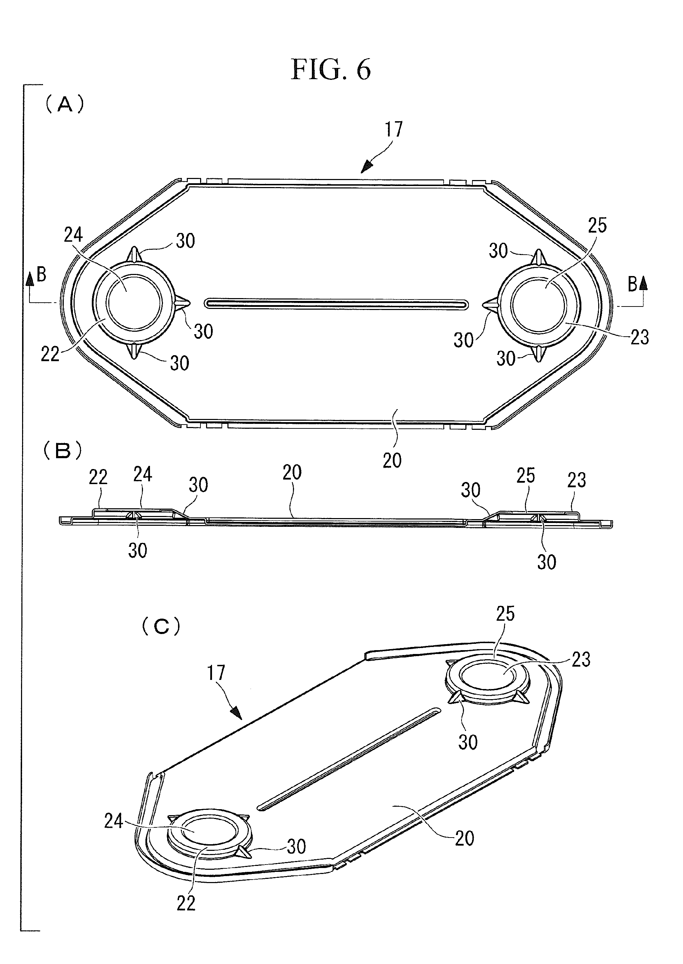

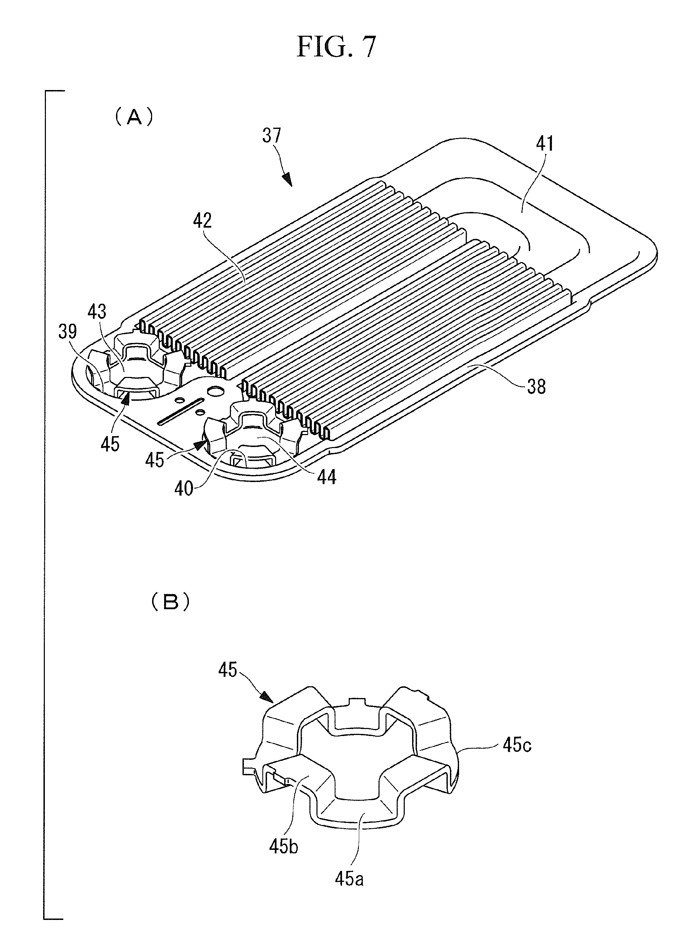

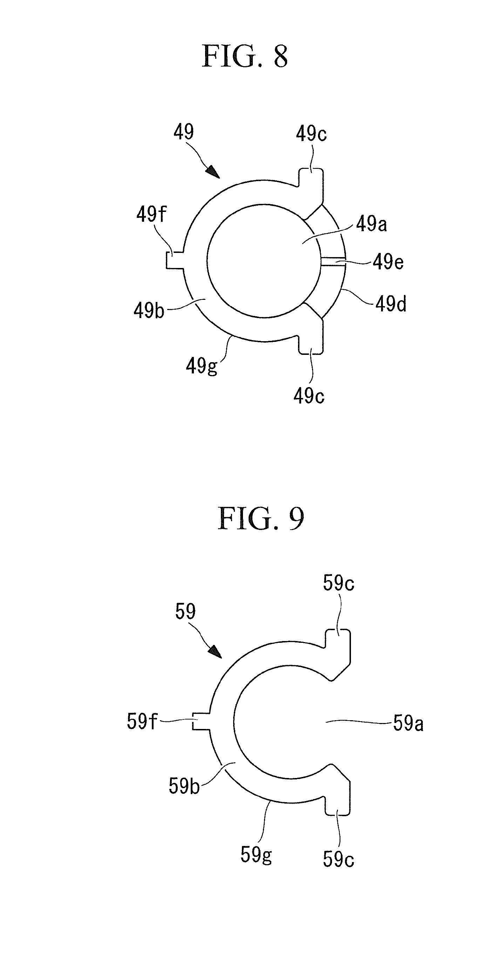

{Fig. 1} Fig. 1 is a schematic configuration diagram of a vehicle air conditioner equipped with a heating-medium heating unit according to a first embodiment of the present invention.
{Fig. 2} Fig. 2 is an exploded perspective view for explaining the procedure for assembling the heating-medium heating unit shown in Fig. 1
{Fig. 3} Fig. 3 shows a plan view (A) and a side view (B) of the heating-medium heating unit shown in Fig. 1.
{Fig. 4} Fig. 4 shows a vertical cross-sectional view (A) of flat heat-exchange tubes used in the heating-medium heating unit shown in Fig. 2, a plan view (B) thereof, and an A-A cross-sectional view (C) of view(B).
{Fig. 5} Fig. 5 shows a perspective view (A) of a spacer member to be inserted into the inlet headers and the outlet headers of the flat heat-exchange tubes in Fig. 4 and a plan view (B) of a modification thereof.
{Fig. 6} Fig. 6 shows a plan view (A) of a molded plate constituting a flat heat-exchange tube used in a heating-medium heating unit according to a second embodiment of the present invention, a B-B cross-sectional view (B) thereof, and a perspective view (C) thereof.
{Fig. 7} Fig. 7 shows a perspective view (A) of the inner structure of a flat heat-exchange tube according to a third embodiment of the present invention and a perspective view (B) of a spacer member to be inserted into the outlet and inlet headers thereof.
{Fig. 8} Fig. 8 is a plan view of a spacer member to be inserted into the outlet and inlet headers of flat heat-exchange tubes according to a fourth embodiment of the present invention.
{Fig. 9} Fig. 9 is a plan view of a spacer member to be inserted into the outlet and inlet headers of flat heat-exchange tubes according to a fifth embodiment of the present invention.

### {Description of Embodiments}

### Embodiments according to the present invention will be described with reference to the drawings.

### {First Embodiment}

A first embodiment of the present invention will be described hereinbelow using Figs. 1 to 5.
Fig. 1 shows a schematic configuration diagram of a vehicle air conditioner equipped with a heating-medium heating unit according to the first embodiment of the present invention. A vehicle air conditioner 1 is equipped with a casing 3 that forms an air channel 2 for taking in outside air or vehicle interior air, controlling the temperature thereof, and thereafter guiding it into the vehicle interior.

The casing 3 accommodates, in sequence from the upstream side to the downstream side of the air channel 2, a blower 4 that takes in outside air or vehicle interior air, increases the pressure thereof, and blows it downstream; a cooler 5 that cools the air blown by the blower 4; a radiator 6 that heats the air cooled by passing through the cooler 5; and an air mix damper 7 that controls the temperature of the temperature-controlled air by adjusting the ratio of the amount of air passing through the radiator 6 to the amount of air bypassing the radiator 6 and mixing the air downstream thereof.

The downstream side of the casing 3 is connected to a plurality of vents through which the temperature-controlled air is blown out to the vehicle interior via a blowing-mode switching damper and a duct (not shown).
The cooler 5 constitutes a refrigerant circuit together with a compressor, a condenser, an expansion valve, and so on (not shown) and cools air passing therethrough by evaporating the refrigerant that is adiabatically expanded at the expansion valve. The radiator 6 constitutes a heating-medium circulating circuit 10A together with a tank 8, a pump 9, and a heating-medium heating unit 10 and heats the air passing therethrough by circulating the heating medium (for example, an antifreeze solution) heated to high temperature by the heating-medium heating unit 10 via the pump 9.

Fig. 2 shows an exploded perspective view for explaining the procedure for assembling the heating-medium heating unit 10 shown in Fig. 1, and Fig. 3 shows a plan view (A) and a side view (B) of the heating-medium heating unit 10. As shown in Fig. 2, the heating-medium heating unit 10 is equipped with a control board 13, electrode plates 14 (see Fig. 3(B)), a plurality of semiconductor switching devices 12 (see Fig. 3(B)) formed of IGBTs or the like, a heat-exchange pressing member (pressing member) 16, a plurality of (for example, three) flat heat-exchange tubes 17, a plurality of sets of PTC (positive temperature coefficient) devices 18a (see Fig. 3(B)), and a casing 11 that accommodates the control board 13, the electrode plates 14, the semiconductor switching devices 12, the stacked flat heat-exchange tubes 17, the heat-exchange pressing member 16, and so on. The electrode plates 14, the PTC devices 18a, insulating members (not shown), to be described later, and so on constitute a plurality of sets of PTC heaters 18.

The casing 11 has a configuration in which it is divided into two, an upper half and a lower half, and is equipped with an upper case 11a located at the upper half (see Fig. 3(B)) and a lower case 11b located at the lower half. The upper case 11a and the lower case 11b form therein a space for accommodating the control board 13, the semiconductor switching devices 12, the electrode plates 14, the heat-exchange pressing member 16, the plurality of stacked flat heat-exchange tubes 17, the plurality of sets of PTC heaters 18, and so on by placing the upper case 11a on an opening portion 11c of the lower case 11b from above the lower case 11b.

A heating-medium inlet (heating-medium port) 11d for introducing the heating medium to be introduced into the three stacked flat heat-exchange tubes 17 and a heating-medium outlet (heating-medium port) 11e for discharging the heating medium that has circulated in the flat heat-exchange tubes 17 are integrally formed with the lower surface of the lower case 11b. The lower case 11b is molded from a plastic material (for example, PBT) whose thermal expansion is close to that of an aluminum alloy material that forms the flat heat-exchange tubes 17 accommodated therein. Also the upper case 11a is preferably molded from the same plastic material as that of the lower case 11b. Forming the casing 11 from the plastic material allows weight reduction.

Furthermore, the lower surface of the lower case 11b has power harness holes 11f and an LV harness hole 11g (see Fig. 3(A)) through which the distal ends of a power harness 27 and an LV harness 28 are to be passed, respectively. The power harness 27 is for supplying power to the PTC heaters 18 via the control board 13 and the semiconductor switching devices 12, and the distal end thereof is forked into two and can be screwed to two power-harness terminal blocks 13c provided on the control board 13 with electrode-harness connecting screws 13b. The LV harness 28 is for transmitting a control signal to the control board 13, and the distal end thereof can be connected to the control board 13 with a connector.

The semiconductor switching devices 12 and the control board 13 constitute a control system that controls power supplied to the plurality of sets of PTC heaters 18 on the basis of an instruction from a higher-level control unit (ECU) and is configured to be able to switch the state of power supplied to the plurality of sets of PTC heaters 18 via the plurality of semiconductor switching devices 12, such as IGBTs. The plurality of flat heat-exchange tubes 17 are stacked so as to sandwich the plurality of sets of PTC heaters 18 from both sides thereof.

The flat heat-exchange tubes 17 are made of an aluminum alloy; for example, three flat heat-exchange tubes 17 are stacked parallel to each other, as shown in Fig. 4(A). These three flat heat-exchange tubes 17 are stacked in the order of lower, middle, and upper flat heat-exchange tubes 17c, 17b, and 17a. Flat tube portions 20 of the flat heat-exchange tubes 17a, 17b, and 17c have corrugated inner fins 21 inserted therein, as shown in Fig. 4(C). This allows a plurality of heating-medium circulation paths communicating in the axial direction to be formed in each of the flat heat-exchange tubes 17a, 17b, and 17c.

Inserting the inner fins 21 in the flat heat-exchange tubes 17a, 17b, and 17c increases the rigidity of the flat heat-exchange tubes 17a, 17b, and 17c. This makes it difficult to deform the plurality of flat heat-exchange tubes 17a, 17b, and 17c even if the flat heat-exchange tubes 17a, 17b, and 17c are pressed towards the inner bottom surface of the lower case 11b with the heat-exchange pressing member 16 of a board subassembly 15, to be described later.

As shown in Fig. 4, the flat heat-exchange tubes 17a, 17b, and 17c are each equipped with the flat tube portion 20, an inlet header 22 through which the heating medium is supplied and an outlet header 23 through which the heating medium is let out, which are formed at both ends, and liquid gaskets for sealing (sealing materials) 26 provided between the stacked inlet headers 22 and between the stacked outlet headers 23. As shown in Fig. 3(B), the flat heat-exchange tubes 17a, 17b, and 17c are stacked parallel to each other such that they sandwich the electrode plates 14 provided at both sides of the PTC heaters 18.

The flat heat-exchange tubes 17a, 17b, and 17c have a flat shape in the axial direction (in the lateral direction in Fig. 4(B)) in plan view. These flat heat-exchange tubes 17a, 17b, and 17c are wide in the flatwise direction, that is, in the thickness direction perpendicular to the axial direction (in the vertical direction in Fig. 4(B)). The inlet header 22 and the outlet header 23 are provided at both ends of each of the flat heat-exchange tubes 17a, 17b, and 17c in the axial direction, that is, at both ends of each flat tube portion 20, and the inlet header 22 and the outlet header 23 are provided with communicating holes 24 and 25 at the center thereof, respectively.

Furthermore, the inlet headers 22 and the outlet headers 23 of the flat heat-exchange tubes 17a, 17b, and 17c each have therein a deformation-preventing spacer member (reinforcing portion) 29 around each of the communicating holes 24 and 25 to prevent the inlet headers 22 and the outlet headers 23 from deforming when the flat heat-exchange tubes 17a, 17b, and 17c are stacked and pressed to achieve close contact. As shown in Fig. 5(A), the spacer members 29 each have a cutout portion 29a corresponding to the communicating hole 24 or 25, a C-shaped main body 29b fitted to the inlet header 22 or the outlet header 23, and rotation stop portions 29c provided around the outer periphery of the main body 29b. As shown in Fig. 5(B), the rotation stop portions 29c may be rotation stop portions 29d formed of minimum protrusions.

The three flat heat-exchange tubes 17c, 17b, 17a are stacked in this order and are pressed towards the inner bottom surface of the lower case 11b with the board subassembly 15, to be described later, so that the area between the lower surfaces of the inlet header 22 and the outlet header 23 of the middle flat heat-exchange tube 17b and the upper surfaces of the inlet header 22 and the outlet header 23 of the lower flat heat-exchange tube 17c located therebelow, as well as the area between the upper surfaces of the inlet header 22 and the outlet header 23 of the middle flat heat-exchange tube 17b and the lower surfaces of the inlet header 22 and the outlet header 23 of the upper flat heat-exchange tube 17a located thereabove, are brought into close contact with each other via the liquid gaskets (sealing materials) 26.

By stacking the flat heat-exchange tubes 17a, 17b, and 17c as described above, the corresponding communicating holes 24 and 25 of the upper flat heat-exchange tube 17a, the middle flat heat-exchange tube 17b, and the lower flat heat-exchange tube 17c communicate, the corresponding inlet headers 22 and the outlet headers 23 communicate, and the peripheries of the communicating holes 24 and 25 are tightly sealed by the liquid gaskets (sealing materials) 26.

Thus, the heating medium guided through the heating-medium inlet 11d is introduced from the inlet headers 22 into the flat tube portions 20 of the flat heat-exchange tubes 17a, 17b, and 17c. This heating medium is heated by the PTC heaters 18 and is increased in temperature in the process of circulating in the flat tube portions 20, flows out to the outlet headers 23, and is let out of the heating-medium heating unit 10 through the heating-medium outlet 11e. The heating medium let out from the heating-medium heating unit 10 is supplied to the radiator 6 via the heating-medium circulating circuit 10A (see Fig. 1).

As shown in Fig. 3(B), the electrode plates 14 are for supplying electric power to the PTC devices 18a and are aluminum alloy plates, which are rectangular in plan view. The electrode plates 14 are stacked on both sides of each of the PTC devices 18a such that one is in contact with the upper surface of the PTC device 18a and one is in contact with the lower surface of the PTC device 18a. The upper surface of the PTC device 18a and the lower surface of the PTC device 18a are sandwiched between these two electrode plates 14.

Furthermore, the electrode plate 14 located on the upper surface of the PTC device 18a is disposed so that the upper surface thereof is in contact with the lower surface of the flat heat-exchange tube 17, and the electrode plate 14 located on the lower surface of the PTC device 18a is disposed so that the lower surface thereof is in contact with the upper surface of the flat heat-exchange tube 17. In this embodiment, four electrode plates 14 in total are disposed such that two are disposed between the lower flat heat-exchange tube 17c and the middle flat heat-exchange tube 17b, and two are disposed between the middle flat heat-exchange tube 17b and the upper flat heat-exchange tube 17a.

The four electrode plates 14 have substantially the same shape as that of the flat heat-exchange tubes 17a, 17b, and 17c. The electrode plates 14 are each provided with a terminal 14a at the long side. The terminals 14a provided on the electrode plates 14 are located along the long sides of the electrode plates 14 in such a manner that they do not overlap with each other when the electrode plates 14 are stacked. That is, the terminals 14a provided on the electrode plates 14 are provided at locations shifted little by little along the long sides thereof so as to be arrayed in a line when the electrode plates 14 are stacked. The terminals 14a are provided so as to protrude upward and are connected to terminal blocks 13a provided on the control board 13 with terminal connecting screws 14b.

The board subassembly 15 is configured such that the control board 13 and the heat-exchange pressing member 16 are disposed in parallel, and the plurality of semiconductor switching devices 12, such as IGBTs, disposed on the upper surface of the heat-exchange pressing member 16 are sandwiched therebetween. The control board 13 and the heat-exchange pressing member 16 are fixed with, for example, four board-subassembly connecting screws 15a, whereby the board subassembly 15 is formed into a single component.

The control board 13 constituting the board subassembly 15 has the four terminal blocks 13a arrayed in a line on the lower surface of one side thereof in correspondence with the four terminals 14a arrayed in a line on the electrode plates 14. Furthermore, the two power-harness terminal blocks 13c connected to the forked distal ends of the power harness 27 are provided at both ends of the four terminal blocks 13a so as to be arranged in a line. These terminal blocks 13a and power-harness terminal blocks 13c are provided so as to protrude downwards from the lower surface of the control board 13. The terminal blocks 13a and the power-harness terminal blocks 13c are provided in a line along the long sides of the stacked flat heat-exchange tubes 17a, 17b, and 17c.

Furthermore, the terminal blocks 13a and the power-harness terminal blocks 13c provided on the control board 13 are disposed so as to be located slightly above the opening portion 11c of the lower case 11b. This makes it easy to fix the terminals 14a of the electrode plates 14 and the distal ends of the power harness 27 to be connected to the terminal blocks 13a and the power-harness terminal blocks 13c.

As shown in Fig. 3(B), the semiconductor switching 12, such as IGBTs, are transistors molded from plastic in a substantially rectangular shape. These semiconductor switching 12, which are heat-generating devices that generate heat when activated, are screwed on the upper surface of the heat-exchange pressing member 16 and in the vicinity of the inlet header 22 of the upper flat heat-exchange tube 17a with connecting screws 12a and are cooled using the heat-exchange pressing member 16 as a heat sink.

The heat-exchange pressing member 16 constituting the board subassembly 15 is an aluminum alloy plate, which is flat in plan view. This heat-exchange pressing member 16 is larger than the control board 13 in the axial direction (in the lateral direction in Fig. 3(A)) so as to cover the flat heat-exchange tubes 17a, 17b, and 17c. The heat-exchange pressing member 16, which is larger than the control board 13 in the axial direction, is provided with holes (not shown), at four locations, through which board-subassembly fixing screws 15b (see Fig. 3(A)) for fixing the heat-exchange pressing member 16 to the lower case 11b can pass.

The board subassembly 15 is placed on the stacked upper flat heat-exchange tube 17a. That is, the board subassembly 15 is disposed such that the lower surface of the heat-exchange pressing member 16 is in contact with the upper surface of the upper flat heat-exchange tube 17a. This board subassembly 15 sandwiches the three flat heat-exchange tubes 17a, 17b, and 17c stacked between the lower surface of the heat-exchange pressing member 16 and the inner bottom surface of the lower case 11b and the two PTC heaters 18 sandwiched therebetween by screwing the heat-exchange pressing member 16 to the lower case 11b with the four board-subassembly fixing screws 15b.

By fixing the board subassembly 15 to the lower case 11b with screws in this way, the three flat heat-exchange tubes 17a, 17b, and 17c stacked towards the inner bottom surface of the lower case 11b and the two PTC heaters 18 sandwiched therebetween can be urged with pressure. Since the heat-exchange pressing member 16 constituting the board subassembly 15 is an aluminum alloy plate, it is used as a heat sink that cools the semiconductor switching devices 12, such as IGBTs, disposed on the heat-exchange pressing member 16 with the cold heat of the heating medium flowing in the flat heat-exchange tubes 17a, 17b, and 17c.

Next, the procedure for assembling the heating-medium heating unit 10 according to this embodiment will be described using Figs. 2 and 3.
First, the lower flat heat-exchange tube 17c in which the inlet header 22 and the outlet header 23 are provided with the spacer members 29 is disposed in the inner space of the lower case 11b so as to be substantially parallel to the inner bottom surface of the lower case 11b. The PTC heater 18 is sandwiched between insulating sheets (not shown) on both sides, and the PTC heater 18 is stacked on the flat tube portion 20 of the flat heat-exchange tube 17c from above the lower flat heat-exchange tube 17c.

Furthermore, the liquid gasket (sealing material) 26 is applied to the upper surfaces of the inlet header 22 and the outlet header 23 of the lower flat heat-exchange tube 17c, on which the middle flat heat-exchange tube 17b is stacked from above. The PTC heater 18 is sandwiched between the insulating sheets on both sides, as above, and the PTC heater 18 is stacked on the flat tube portion 20 of the middle flat heat-exchange tube 17b from above the middle flat heat-exchange tube 17b. Next, the liquid gasket 26 is applied to the upper surfaces of the inlet header 22 and the outlet header 23 of the middle flat heat-exchange tube 17b, and the upper flat heat-exchange tube 17a is stacked thereon from above the middle flat heat-exchange tube 17b.

The board subassembly 15 is stacked from above the thus-stacked upper flat heat-exchange tube 17a so that the heat-exchange pressing member 16 is located below, and thereafter, the heat-exchange pressing member 16 of the board subassembly 15 stacked on the upper flat heat-exchange tube 17a is tightly secured to the lower case 11b with the board-subassembly fixing screws 15b. Thus, the inlet headers 22 and the outlet headers 23 of the flat heat-exchange tubes 17a, 17b, and 17c are pressed into close contact with each other in the direction of the inner bottom surface of the lower case 11b, and hence the area between the inlet headers 22 and the area between the outlet headers 23 are tightly sealed by the liquid gasket 26.

Since the inlet headers 22 and the outlet headers 23 are brought into close contact, the PTC heaters 18 and the electrode plates 14 sandwiched between the lower flat heat-exchange tube 17c and the middle flat heat-exchange tube 17b and between the middle flat heat-exchange tube 17b and the upper flat heat-exchange tube 17a are also brought into close contact with the outer surfaces of the flat tube portions 20 of the flat heat-exchange tubes 17a, 17b, and 17c, and thus the thermal contact resistance therebetween can be reduced.

Next, the terminal blocks 13a provided on the control board 13 constituting the board subassembly 15 and the terminals 14a of the electrode plates 14 are finally secured with the terminal connecting screws 14b, the power harness 27 is inserted into the power harness holes 11f, and the distal ends thereof and the power-harness terminal blocks 13c provided on the control board 13 are fixed with the power-harness connecting screws 13b. Furthermore, the distal end of the LV harness 28 is inserted into the lower case 11b through the LV harness hole 11g formed in a side wall of the lower case 11b and is connected to the control board 13 with a connector. Thereafter, the power harness 27 is fixed from the outer bottom surface of the lower case 11b with power-harness fixing screws 27a, and the LV harness 28 is fixed in the LV harness hole 11g.

Next, a liquid gasket (which may be the same liquid gasket as that applied to the upper surfaces of the inlet headers 22 and the outlet headers 23) is applied to the opening portion 11c of the lower case 11b. The upper case 11a is placed on the opening portion 11c of the lower case 11b from above, and clips (not shown) provided on the upper case 11a are hooked to tabs (not shown) provided on the lower case 11b to fasten the upper case 11a and the lower case 11b together, thus terminating the assembly of the heating-medium heating unit 10.

The liquid gasket (sealing material) 26 used in this embodiment is a curable liquid sealing material that hardens on contact with moisture in air, that has high thermal resistance and is suitable for sealing the area between the inlet headers 22 and the area between the outlet headers 23 of the flat heat-exchange tubes 17, which are exposed to high temperature, (for example, product number 1207d, made by ThreeBond Co., Ltd., a silicone-based liquid gasket containing silicone as a main component). Although this embodiment uses the liquid gaskets 26 as sealing materials between the inlet headers 22 and between the outlet headers 23 of the flat heat-exchange tubes 17 and as a sealing material between the lower case 11b and the upper case 11a, they may be substituted by O-rings.

As described above, the heating-medium heating unit 10 and the vehicle air conditioner 1 according to this embodiment provide the following advantages.
The plurality of (three) flat heat-exchange tubes 17, which are stacked in sequence on at least both sides of the individual PTC heaters 18, are stacked parallel to each other, and the board subassembly 15, in which the control board 13 and the heat-exchange pressing member (pressing member) 16 are combined, is provided on the upper surface of the upper flat heat-exchange tube 17a and is tightly secured to the lower case 11b.

Thus, the sealing materials, such as the liquid gaskets (sealing materials) 26 or O-rings, provided between the inlet headers 22 and between the outlet headers 23, can be brought into close contact with each other by the heat-exchange pressing member 16 constituting the board subassembly 15. This can therefore enhance the adhesion between the stacked flat heat-exchange tubes 17 and reduce the thermal contact resistance between the PTC heaters 18 stacked between the plurality of flat heat-exchange tubes 17 and the flat heat-exchange tubes 17 to enhance the heat transfer efficiency from the PTC heaters 18 to the flat heat-exchange tubes 17, thus allowing the performance of the heating-medium heating unit 10 to be enhanced.

The stacked flat heat-exchange tubes 17 and PTC heaters 18 are pressed by the heat-exchange pressing member 16 into close contact with each other; however, since the spacer members 29 serving as deformation-preventing reinforcing portions are provided around the communicating holes 24 and 25 in the inlet headers 22 and the outlet headers 23 of the flat heat-exchange tubes 17, the deformation-preventing spacer members 29 can suppress deformation around the communicating holes 24 and 25 in the inlet headers 22 and the outlet headers 23 when the stacked flat heat-exchange tubes 17 and PTC heaters 18 are pressed by the heat-exchange pressing member 16 into close contact with each other.

This allows the sealing performance around the communicating holes 24 and 25 using the sealing materials, such as the liquid gaskets 26 or O-rings, to be ensured, thus preventing leakage of the heating medium from the peripheries of the communicating holes 24 and 25 of the inlet headers 22 and the outlet headers 23. The stacked structure of the plurality of flat heat-exchange tubes 17 and the PTC heaters 18 eliminates the need for a heating-medium circulation box, which is a large component made of die-cast aluminum, and so on, thus reducing the size and weight as well as the cost of the heating-medium heating unit 10.

Since the foregoing deformation-preventing spacer members 29 are integrally provided with the rotation stop portions 29c or 29d, a positional shift of the spacer members 29 inserted around the communicating holes 24 and 25 of the inlet headers 22 and the outlet headers 23 due to the rotation of the spacer members 29 can be prevented by the rotation stop portions 29c or 29d. This allows the spacer members 29 to be located at predetermined positions and to be inserted therein, thereby preventing a situation in which the flow of the heating medium is obstructed by the spacer members 29.

Since the liquid gaskets 26 or O-rings are used as the sealing materials that seal the peripheries of the communicating holes 24 and 25 of the inlet headers 22 and the outlet headers 23, the liquid gaskets 26 are applied or O-rings are interposed around the communicating holes 24 and 25 of the inlet headers 22 and the outlet headers 23 when the flat heat-exchange tubes 17 and the PTC heaters 18 are sequentially stacked for assembly, and at the same time as the flat heat-exchange tubes 17 and the PTC heaters 18 are pressed with the heat-exchange pressing member 16, they can be brought into close contact with the entire surfaces of the inlet headers 22 and the outlet headers 23, which are prevented from deforming by the spacer members 29. Accordingly, the heating-medium heating unit 10 can be easily assembled using the liquid gaskets 26 or O-rings, and the sealing performance using the liquid gaskets 26 or O-rings can be reliably ensured.

The plurality of stacked flat heat-exchange tubes 17 and PTC heaters 18 are tightly secured to the inner surface of the casing 11 with the heat-exchange pressing member 15 so that they are fixed in close contact with each other. This allows the flat heat-exchange tubes 17 and the PTC heaters 18 to be brought into close contact with each other during the process of assembling them in the casing 11, thereby ensuring the sealing performance using the liquid gaskets 26 or O-rings, and allows the thermal contact resistance between the flat heat-exchange tubes 17 and the PTC heaters 18 to be reduced, thereby enhancing the heat transfer efficiency, and thus enhancing the production efficiency of the heating-medium heating unit 10.

The semiconductor switching devices 12 serving as heat-generating devices, such as IGBTs, are provided between the aluminum-alloy heat-exchange pressing member 16 and the control board 13. This allows the stacked flat heat-exchange tubes 17 and PTC heaters 18 to be pressed by the heat-exchange pressing member 16 and the control board 13, and the semiconductor switching devices 12 to be cooled by the cold heat from the flat heat-exchange tubes 17 by using the heat-exchange pressing member 16 as a heat sink. This allows the cooling performance of the semiconductor switching devices 12 to be ensured, thus further enhancing the performance of the heating-medium heating unit 10. Since both the pressure applied to the stacked flat heat-exchange tubes 17 and the cooling of the semiconductor switching devices 12 are achieved by the heat-exchange pressing member 16, the number of components that constitute the heating-medium heating unit 10 can be reduced, and hence the entire heating-medium heating unit 10 can be made compact.

The heating-medium inlet (heating-medium port) 11d for introducing the heating medium and the heating-medium outlet (heating-medium port) 11e for letting out the heating medium are integrally formed with the lower case 11b. This allows the stress applied to the stacked flat heat-exchange tubes 17 when the heating medium is supplied to the heating-medium heating unit 10 to be dispersed, and thus, the load on the flat heat-exchange tubes 17 can be reduced.

Since the control system, which is formed of the control board 13, the semiconductor switching devices 12, and so on and which controls power supply to the PTC heaters 18, is integrated in the form of the board subassembly 15 and is accommodated in the casing 11, electrical connection with the electrode plates 14 can be performed simply by fixing the terminal blocks 13a provided on the control board 13 constituting the board subassembly 15 and the terminals 14a provided on the electrode plates 14 with the terminal connecting screws 14b, and the need for wires (harnesses) for electrical connection can be eliminated. This can prevent complication of the wiring path, improving the ease-of-assembly performance easy, and can reduce the number of components, thereby simplifying the wiring path of the control system, and hence it is possible to provide a high-performance, compact heating-medium heating unit 10 in which the flat heat-exchange tubes 17, the PTC heaters 18, and the control system therefor are integrally accommodated in the casing 11.

The semiconductor switching devices (heat-generating devices) 12, such as the IGBTs, connected to the control board 13 are disposed in positions close to the inlet headers 22 of the flat heat-exchange tubes 17. This allows the semiconductor switching devices 12 to be cooled by the heating medium at a relatively low temperature, before being heated by the PTC heaters 18, and thus the cooling performance of the semiconductor switching 12 can be further enhanced.

Furthermore, since the lightweight, compact, high-performance heating-medium heating unit 10 whose heat transfer efficiency is enhanced and in which there is no possibility that the heating medium leaks is assembled, and the heating medium to be circulated into the radiator 6 can be heated by the heating-medium heating unit 10, as described above, the reliability and the air-conditioning performance of the vehicle air conditioner 1 can be enhanced, and the installation space can be reduced, so that the ease-of-installation in vehicles can be enhanced.

### {Second Embodiment}

Next, a second embodiment of the present invention will be described hereinbelow using Fig. 6.
This embodiment differs from the foregoing first embodiment in the configurations of the deformation-preventing reinforcing portions of the inlet headers 22 and the outlet headers 23 of the flat heat-exchange tubes 17. Since the other features are the same as those of the first embodiment, descriptions thereof will be omitted.
This embodiment is configured such that ribs (reinforcing portions) 30 are integrally molded around the communicating holes 24 and 25 of the inlet headers 22 and the outlet headers 23 instead of the spacer members 29 provided in the inlet headers 22 and the outlet headers 23. These ribs 30 are provided at a plurality of locations around the communicating holes 24 and 25 so as to point in the radial direction so as to protrude to the outer surfaces of the flat heat-exchange tubes 17.

Using the ribs 30 integrally molded around the communicating holes 24 and 25 of the inlet headers 22 and the outlet headers 23 as the deformation-preventing reinforcing portions for the inlet headers 22 and the outlet headers 23, as described above, ensures the strength around the communicating holes 24 and 25 by means of the ribs 30 and can suppress deformation around the communicating holes 24 and 25 of the inlet headers 22 and the outlet headers 23 when the stacked flat heat-exchange tubes 17 and PTC heaters 18 are pressed into close contact with each other with the heat-exchange pressing member 16. Accordingly, this ensures the sealing performance around the communicating holes 24 and 25 of the inlet headers 22 and the outlet headers 23 using the liquid gaskets (sealing materials) 26 or O-rings, thereby preventing leakage of the heating medium from the peripheries of the communicating holes 24 and 25. Furthermore, the use of the ribs 30 integrally molded with the flat heat-exchange tubes 17 as the deformation-preventing reinforcing portions can prevent an increase in the number of components, thus suppressing an increase in cost.

Furthermore, the ribs 30 are integrally molded at a plurality of locations around the communicating holes 24 and 25 of the inlet headers 22 and the outlet headers 23 so as to point in the radial direction. Therefore, the ribs 30 at the plurality of locations can greatly increase the strength of the peripheries of the communicating holes 24 and 25 to suppress deformation around the communicating holes 24 and 25 of the inlet headers 22 and the outlet headers 23 when the stacked flat heat-exchange tubes 17 and PTC heaters 18 are pressed into close contact with each other by the heat-exchange pressing member 16, and thus ensures the sealing performance around the communicating holes 24 and 25 using the liquid gaskets 26 or O-rings, thereby reliably preventing leakage of the heating medium from the peripheries of the communicating holes 24 and 25. Since the ribs 30 protrude to the outer surfaces of the flat heat-exchange tubes 17, the ribs 30 do not present any resistance to the flow of the heating medium, and hence a decrease in heat transfer efficiency due to an increase in pressure loss can be suppressed.

### {Third Embodiment}

Next, a third embodiment of the present invention will be described hereinbelow using Fig. 7. Fig. 7(A) is a perspective view showing the inner structure in a state in which one of two molded plates constituting the flat heat-exchange tube is removed.
This embodiment differs from the foregoing first embodiment in the configuration of flat heat-exchange tubes 37 and the configuration of spacer members 45, serving as deformation-preventing reinforcing portions, provided in inlet headers 39 and outlet headers 40 of the flat heat-exchange tubes 37. Since the other features are the same as those of the first embodiment, descriptions thereof will be omitted.
As shown in Fig. 7(A), the flat heat-exchange tubes 37 according to this embodiment are configured such that inlet headers 39 and outlet headers 40 are provided at one end of flat tube portions 38, unlike the structure in which the inlet headers 22 and the outlet headers 23 are provided at both ends of the flat tube portions, as in the case of the flat heat-exchange tubes 17 of the first embodiment; channels formed in the flat tube portions 38 extend from the inlet headers 39 to the other end and make a U-turn at the other end to form U-turn channels 41 returning to the outlet headers 40; and inner fins 42 are inserted therein.

Also when using the flat heat-exchange tubes 37 in which the U-turn channels 41 are formed and the inlet headers 39 and the outlet headers 40 are provided at one end of the flat tube portions 38, as described above, when the plurality of flat heat-exchange tubes 37 are stacked parallel to each other, and the board subassembly 15 in which the control board 13 and the heat-exchange pressing member (pressing member) 16 are combined is assembled on the upper surface of the upper flat heat-exchange tube 37 and is tightened to the lower case 11b, it is necessary to suppress deformation around communicating holes 43 and 44 of the inlet headers 39 and the outlet headers 40 and to ensure the sealing performance using the sealing materials, such as O-rings or the liquid gaskets 26 provided between the inlet headers 39 and the outlet headers 40, thereby preventing leakage of the heating medium from the peripheries of the communicating holes 43 and 44, as in the first embodiment.

Accordingly, as shown in Fig. 7(B), this embodiment is configured such that spacer members (reinforcing portions) 45 each formed of a ring-shaped integrally press-molded component 45c in which a plurality of depressions and protrusions 45a and 45b are alternately bent by molding in a wave shape around the circumferential direction are inserted around the communicating holes 43 and 44 in the inlet headers 39 and the outlet headers 40, as shown in Fig. 7(A), to prevent deformation around the communicating holes 43 and 44 of the inlet headers 39 and the outlet headers 40. The plurality of depressions and protrusions 45a and 45b of the spacer members 45 are provided in a radiating pattern in the radial direction so as to minimize the circulation resistance that the spacer members 45 present to the heating medium that is let in and out through the communicating holes 43 and 44.

Also when the flat heat-exchange tubes 37 in which the inlet headers 39 and the outlet headers 40 are provided at one end of the flat tube portions 38 serving as the flat heat-exchange tubes to form the U-turn channels 41 are used, as described above, deformation around the communicating holes 43 and 44 of the inlet headers 39 and the outlet headers 40 when the stacked flat heat-exchange tubes 37 and PTC heaters 18 are pressed into close contact with each other by the heat-exchange pressing member 16 can be suppressed by using the spacer members 45 inserted around the communicating holes 43 and 44 in the inlet headers 39 and the outlet headers 40. Accordingly, this can ensure the sealing performance around the communicating holes 43 and 44 of the inlet headers 39 and the outlet headers 40 with the sealing materials, such as O-rings or the liquid gaskets 26, thereby reliably preventing leakage of the heating medium from the peripheries of the communicating holes 43 and 44, as in the first embodiment.

Furthermore, since the spacer members 45 are the ring-shaped integrally press-molded components 45c in which the heating medium circulates between the plurality of depressions and protrusions 45a and 45b, which are alternately bent by molding in a wave shape in the circumferential direction, the circulation resistance presented to the heating medium in the flat heat-exchange tubes 37 can be reduced, and the whole circumferences of the communicating holes 43 and 44 of the inlet headers 39 and the outlet headers 40, which tend to be deformed when pressed by the heat-exchange pressing member 16, can be supported by the plurality of depressions and protrusions 45a and 45b. Accordingly, the use of the integrally press-molded components 45c as the spacer members 45 can reduce the cost and weight and can enhance the reliability against leakage of the heating medium by maintaining the deformation prevention effect around the communicating holes 43 and 44 to ensure the sealing performance around the communicating holes 43 and 44 while suppressing a drop in performance due to pressure loss.

Furthermore, since the plurality of depressions and protrusions 45a and 45b, which are bent by molding in a wave shape, are provided in a radiating pattern in the radial direction, the heating medium that flows in or out via the communicating holes 43 and 44 of the inlet headers 39 and the outlet headers 40 can be made to flow in or out along the plurality of depressions and protrusions 45a and 45b provided in a radiating pattern in the radial direction. Accordingly, this can minimize the circulation resistance presented by the spacer members 45 to the heating medium that is let in and out via the communicating holes 43 and 44, thereby preventing a drop in performance due to pressure loss.

It is needless to say that, in the case where the flat heat-exchange tubes 37 in which the inlet headers 39 and the outlet headers 40 are provided at one end of the flat tube portions 38 are used, the heating-medium inlet 11d and the heating-medium outlet 11e provided in the casing 11 have to be provided at one end of the casing 11 in correspondence with the inlet headers 39 and the outlet headers 40. Of course, the foregoing spacer members 45 may be inserted in the inlet headers 22 and the outlet headers 23 of the flat heat-exchange tubes 17 of the first embodiment.

### {Fourth Embodiment}

Next, a fourth embodiment of the present invention will be described hereinbelow using Fig. 8.
This embodiment differs from the foregoing first to third embodiments in the configuration of spacer members 49. Since the other features are the same as those of the first to third embodiments, descriptions thereof will be omitted.
As shown in Fig. 8, the spacer members (reinforcing portions) 49 of this embodiment are configured such that a portion corresponding to the communicating holes 24 and 25 or 43 and 44 of the flat heat-exchange tubes 17 or 37 and a portion facing the heating-medium circulation path side of the flat tube portion 20 or 38 define a cutout portion 49a and are each provided with a C-shaped main body 49b to be inserted into the inlet headers 22 or 39 and the outlet headers 23 or 40 and rotation stop portions 49c provided around the outer circumference of the main body 49b; and the main body 49b is inserted into the inlet headers 22 or 39 and the outlet headers 23 or 40 such that both end faces of the main body 49b come in contact with the upper and lower inner surfaces thereof.

Furthermore, these spacer members 49 are each configured such that a thin-walled joint 49d is integrally formed therewith at the portion defining the cutout portion 49a and facing the heating-medium circulation path; a radial rib 49e having the same wall thickness as that of the main body 49b is provided at at least one location on the joint 49d; a locating rib 49f, which is in contact with the inner circumferential surface of the inlet headers 22 or 39 and the outlet headers 23 or 40, is provided at at least one location on the outer circumference of the main body 49b; and a reduced-thickness portion 49g in which the outer circumferential surface of the main body 49b is reduced in thickness in the circumferential direction, while keeping the rib 49f, is provided. These spacer members 49 can be molded as single components by forging or the like.

As described above, the spacer members 49 are each provided with the C-shaped main body 49b in which the portion corresponding to the communicating holes 24 and 25 or 43 and 44 and the portion facing the heating-medium circulation path define the cutout portion 49a, and they are inserted such that both end faces thereof come into contact with the upper and lower inner surfaces of the inlet headers 22 or 39 and the outlet headers 23 or 40. This eliminates a possibility that the spacer members 49 present resistance to the circulation of the heating medium in the flat heat-exchange tubes 17 or 37 and can prevent deformation around the communicating holes 24 and 25 or 43 and 44 of the inlet headers 22 or 39 and the outlet headers 23 or 40 when the flat heat-exchange tubes 17 or 37 are pressed into close contact with each other by the heat-exchange pressing member 16 by using the C-shaped main bodies 49b, which are in contact with the inner surfaces. Accordingly, this can reliably ensure the sealing performance around the communicating holes 24 and 25 or 43 and 44 of the inlet headers 22 or 39 and the outlet headers 23 or 40, thus enhancing the reliability against leakage of the heating medium.

Furthermore, the thin-walled joint 49d is integrally formed with the portion of the spacer members 49 that is formed as the cutout portion 49a and faces the heating-medium circulation path, and the radial rib 49e having the same wall thickness as that of the main body 49b is provided at at least one location on the joint 49d. Therefore, if the size of the cutout portion 49a facing the heating-medium circulation path is excessively increased to reduce the circulation resistance presented to the heating medium, the deformation prevention effect around the communicating holes 24 and 25 or 43 and 44 of the inlet headers 22 or 39 and the outlet headers 23 or 40 due to the spacer members 49 is decreased; however, providing the joint 49d and the radial rib 49e, as described above, allows the deformation prevention effect around the communicating holes 24 and 25 or 43 and 44 to be maintained while reducing the circulation resistance presented to the heating medium, thereby making it possible to simultaneously achieve both a reduction in circulation resistance presented to the heating medium and the deformation prevention effect around the communicating holes 24 and 25 or 43 and 44, which conflict with each other.

Furthermore, since the locating rib 49f, which is in contact with the inner circumferential surface of the inlet headers 22 or 39 and the outlet headers 23 or 40, is provided at at least one location on the outer circumference of the C-shaped main body 49b of the spacer member 49, and the circumference-wise reduced-thickness portion 49g is provided around the outer circumferential surface of the main body 49b, while keeping the rib 49f, deformation around the communicating holes 24 and 25 or 43 and 44 of the inlet headers 22 or 39 and the outlet headers 23 or 40, which tend to be deformed when pressed by the heat-exchange pressing member 16, can be prevented by supporting them with the main bodies 49b of the spacer members 49, and the spacer members 49 can be reduced in size as much as possible by reducing, in the circumferential direction, the wall thicknesses of the outer circumferential surfaces thereof, which are in contact with the inner circumferential surfaces of the inlet headers 22 or 39 and the outlet headers 23 or 40, which are resistant to deformation. Accordingly, this can reduce the amount of a material used to manufacture the spacer members 49, thus reducing the cost of the spacer members 49.

### {Fifth Embodiment}

Next, a fifth embodiment of the present invention will be described hereinbelow using Fig. 9.
This embodiment differs from the foregoing first to fourth embodiments in the configuration of spacer members 59. Since the other features are the same as those of the first to fourth embodiments, descriptions thereof will be omitted.
As shown in Fig. 9, the spacer members (reinforcing portions) 59 of this embodiment are configured such that the portion corresponding to the communicating holes 24 and 25 or 43 and 44 of the flat heat-exchange tubes 17 or 37 and the portion facing the heating-medium circulation path side of the flat tube portions 20 or 38 are formed as a cutout portion 59a and are each provided with a C-shaped main body 59b inserted into the inlet headers 22 or 39 and the outlet headers 23 or 40, rotation stop portions 59c provided around the outer circumference of the main body 59b, a locating rib 59f, which is provided at at least one location on the outer circumference of the main body 59b and which is brought into contact with the inner circumferential surfaces of the inlet headers 22 or 39 and the outlet headers 23 or 40, and a reduced-thickness portion 59g in which the outer circumferential surface of the main body 59b is reduced in thickness in the circumferential direction, while keeping the rib 59f.

That is, it is configured such that the joint 49d and the rib 49f are omitted from the spacer member 49 shown in Fig. 8. Such a configuration allows the thus-shaped spacer member 59 to be manufactured as an integrally molded component merely by cutting a molded component extruded in a long size to a predetermined thickness.

As described above, the spacer member 59 is an integrally molded component formed by cutting a long extruded molded component into a predetermined thickness. Therefore, merely by manufacturing a long extruded molded component whose cross-section is shaped to correspond to the C-shape of the main body 59b and in which the rotation stop portions 59c are integrally formed therearound as necessary and by cutting it into a predetermined thickness, the spacer member 59 can be simply and easily manufactured as an integrally molded component. This can further reduce the cost of the spacer members 59, and thus reduce the cost of the heating-medium heating unit 10. Furthermore, since the reduced-thickness portion 59g is provided, the amount of a material for use in manufacturing the spacer members 59 can be reduced, and thus the cost of the spacer members 59 can be reduced, as in the fourth embodiment.

The present invention is not limited to the invention according to the foregoing embodiments, and various modifications can be made without departing from the spirit thereof. For example, although the foregoing embodiments are configured such that the flat heat-exchange tubes 17 or 37 are stacked in three layers, between which the PTC heaters 18 are assembled, the present invention is not limited thereto; the number of the stacked flat heat-exchange tubes 17 or 37 and PTC heaters 18 may be increased or decreased. Although the material of the spacer members 29, 45, 49, and 59 is not particularly limited, it is preferable that they be made of an aluminum alloy having a high heat transfer coefficient and a low weight in view of weight reduction and heat transfer.

### {Reference Signs List}

- 1: vehicle air conditioner
- 6: radiator
- 10: heating-medium heating unit
- 10A: heating-medium circulating circuit
- 11: casing
- 11d: heating-medium inlet
- 11e: heating-medium outlet
- 12: semiconductor switching device (control system)
- 13: control board (control system)
- 16: heat-exchange pressing member
- 17, 17a, 17b, 17c: flat heat-exchange tube
- 18: PTC heater
- 20: flat tube portion
- 22: inlet header
- 23: outlet header
- 24, 25: communicating hole
- 26: liquid gasket (sealing material)
- 29: spacer member (reinforcing portion)
- 29c, 29d: rotation stop portion
- 30: rib (reinforcing portion)
- 37: flat heat-exchange tube
- 38: flat tube portion
- 39: inlet header
- 40: outlet header
- 43, 44: communicating hole
- 45, 49, 59: spacer member (reinforcing portion)
- 45a, 45b: depressions and protrusions
- 45c: integrally press-molded component
- 49a, 59a: cutout portion
- 49b, 59b: main body
- 49c, 59c: rotation stop portion
- 49d: joint
- 49e: radial rib
- 49f, 59f: locating rib
- 49g, 59g: reduced-thickness portion

## Claims

1. A heating-medium heating unit comprising:
a plurality of flat heat-exchange tubes each having an inlet header and an outlet header at one end or both ends of flat tube portions through which a heating medium is circulated;
sealing materials that seal peripheries of communicating holes of the inlet headers and the outlet headers of the alternately stacked flat heat-exchange tubes;
PTC heaters assembled between the flat tube portions of the flat heat-exchange tubes; and
a heat-exchange pressing member that presses the alternately stacked flat heat-exchange tubes and the PTC heaters into close contact with each other,
wherein a deformation-preventing reinforcing portion is provided around each of the communicating holes in the inlet header and the outlet header of each of the flat heat-exchange tubes.

2. The heating-medium heating unit according to Claim 1, wherein the deformation-preventing reinforcing portion is a spacer member inserted around each of the communicating holes in the inlet headers and the outlet headers.

3. The heating-medium heating unit according to Claim 2, wherein the spacer member is integrally provided with a rotation stop portion.

4. The heating-medium heating unit according to Claim 2 or 3, wherein the spacer member is provided with a C-shaped main body in which a portion corresponding to the communicating hole and a portion facing a heating-medium circulation path define a cutout portion and is inserted such that the both end faces thereof come into contact with an upper and a lower inner surfaces of each of the inlet headers and the outlet headers.

5. The heating-medium heating unit according to Claim 4, wherein the spacer member has a thin-walled joint integrally formed with the cutout portion facing the heating-medium circulation path and has a radial rib having the same wall thickness as that of the main body at at least one location on the joint.

6. The heating-medium heating unit according to any one of Claims 2 to 4, wherein the spacer member is an integrally molded component formed by cutting an extruded molded component to a predetermined thickness.

7. The heating-medium heating unit according to any one of Claims 4 to 6, wherein the spacer member is provided with, at at least one location on the outer circumference of the C-shaped main body, a locating rib that is in contact with an inner circumferential surface of each of the inlet headers and the outlet headers, and an outer circumferential surface of the main body is reduced in thickness in a circumferential direction, while keeping the rib.

8. The heating-medium heating unit according to Claim 2 or 3, wherein the spacer member is a ring-shaped integrally press-molded component in which a plurality of depressions and protrusions are alternately bent by molding in a wave shape in a circumferential direction.

9. The heating-medium heating unit according to Claim 8, wherein the plurality of depressions and protrusions are provided in a radiating pattern in a radial direction.

10. The heating-medium heating unit according to Claim 1, wherein the deformation-preventing reinforcing portion is a rib that is integrally molded around each of the communicating holes of the inlet headers and the outlet headers.

11. The heating-medium heating unit according to Claim 10, wherein the rib is provided so as to point in a radial direction at a plurality of locations around each of the communicating holes of the inlet headers and the outlet headers.

12. The heating-medium heating unit according to any one of Claims 1 to 11, wherein the sealing material is a liquid gasket or an O-ring.

13. The heating-medium heating unit according to any one of Claims 1 to 12, wherein the plurality of stacked flat heat-exchange tubes and the PTC heaters are tightly secured to an inner surface of a casing provided with a heating-medium inlet and a heating-medium outlet that communicate with the inlet header and the outlet header, respectively, with the heat-exchange pressing member.

14. The heating-medium heating unit according to Claim 13, wherein the casing integrally accommodates a control system that controls power to be supplied to the PTC heaters.

15. A vehicle air conditioner configured to cause a heating medium heated by a heating-medium heating unit to circulate to a radiator disposed in an air channel,
wherein the heating-medium heating unit is the heating-medium heating unit according to any one of Claims 1 to 14.
